Europäisches Patentamt

European Patent Office

Office européen des brevets

(19)

(11) **EP 1 008 892 A1**

(12) **DEMANDE DE BREVET EUROPEEN**

(43) Date de publication:
**14.06.2000 Bulletin 2000/24**

(51) Int Cl.7: **G02F 1/025**

(21) Numéro de dépôt: **99403044.3**

(22) Date de dépôt: **06.12.1999**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **08.12.1998 FR 9815486**

(71) Demandeur: **ALCATEL**
**75008 Paris (FR)**

(72) Inventeur: **Duchet, Christian**
**94230 Cachan (FR)**

(74) Mandataire: **Ballot, Paul**
**Cabinet Ballot-Schmit,**
**16, Avenue du Pont Royal**
**94250 Cachan (FR)**

(54) **Modulateur de phase à semi-conducteur**

(57)     L'invention concerne un modulateur de phase à semiconducteur comprenant une couche de gaine inférieure, un guide d'onde actif et une couche de gaine supérieure, déposés successivement sur un substrat en matériau III-V. Le guide d'onde actif comporte au moins une première couche active, possédant une première longueur d'onde de photoluminescence ($l_1$), et une deuxième couche active de compensation, possédant une deuxième longueur d'onde de photoluminescence ($l_2$). La longueur d'onde d'utilisation ($l_0$) du modulateur est supérieure à la première longueur d'onde de photoluminescence ($l_1$) d'une valeur comprise entre 80 et 200nm, et elle est supérieure à la deuxième longueur d'onde de photoluminescence ($l_2$) d'une valeur supérieure à 300nm.

FIG.5

**Description**

La présente invention se situe dans le domaine des composants optiques à semi-conducteurs utilisés pour la transmission optique ou le traitement de données optiques.

Elle se rapporte plus particulièrement à tous les composants optiques comportant une structure interférométrique utilisant des variations de phase. Pour simplifier l'exposé de l'invention, on ne parlera, dans la suite, que d'une structure interférométrique de type Mach-Zehnder, l'objet de l'invention s'étendant, comme cela vient d'être dit, également à toutes les autres structures comportant un modulateur de phase.

Un des problèmes principaux que l'on cherche en général à résoudre en optique intégré consiste à réaliser des dispositifs indépendants de la polarisation (TE, TM) de la lumière.

Les modulateurs de type Mach-Zehnder classiques, réalisés avec des matériaux semi-conducteurs, comportent un empilement de couches sur un substrat. Cet empilement est réalisé par dépôts successifs d'une couche de gaine inférieure, d'une couche active formant le guide d'onde actif du composant et d'une couche de gaine supérieure. Les couches sont déposées par un procédé classique d'épitaxie. Les premiers modulateurs dans l'art antérieur utilisaient des substrats à base de niobate de lithium (LiNbO$_3$) qui est un matériau très dépendant de la polarisation de la lumière. Ce matériau a ensuite été remplacé par du phosphure d'indium InP. En général, le guide d'onde actif est constitué d'un matériau quaternaire unique non dopé, de type InGaAsP par exemple.

La variation de phase Dj, dans un modulateur de phase, est proportionnelle au produit de la variation de l'indice de réfraction Dn, dans le guide d'onde actif, par la longueur L de ce guide actif. Elle obéit en fait à la relation (1) suivante:

$$Dj = (2p/l) \times Dn \times L \qquad (1)$$

où l représente la longueur d'onde d'utilisation. La longueur d'onde d'utilisation est définie comme étant la longueur d'onde de l'onde porteuse utilisée pour assurer le fonctionnement du composant. La variation de l'indice de réfraction Dn est en outre égale au produit SxDE, où S représente la sensibilité du composant et DE la variation de champ électrique appliqué pour assurer son fonctionnement. DE s'écrit aussi DV/e, où DV représente la variation de la tension de commande, et e l'épaisseur du guide d'onde actif. La relation (1) peut donc s'écrire de la manière suivante:

$$Dj = (2p/l) \times S \times (DV/e) \times L \qquad (2).$$

De cette relation, on en déduit que pour réduire la tension de commande dans un modulateur de phase, il faut augmenter la longueur. Or la longueur est fonction de la capacité C. En effet si on augmente la longueur L, on augmente la capacité C du composant car C est donnée par la relation suivante :

$$C = (eWL)/e \qquad (3),$$

où W représente la largeur du guide d'onde actif et e la permittivité. La relation (2) devient donc

$$Dj = (2p/l) \times (1/(eW)) \times S \times C \times DV \qquad (4).$$

Cette relation montre que pour une capacité C fixée (donc pour une bande passante fixée), la variation de phase est indépendante de la longueur et de l'épaisseur de la couche active. Par conséquent, pour réduire la tension de commande DV il faut augmenter la sensibilité S.

Le but de l'invention consiste donc à réaliser un modulateur de phase insensible à la polarisation de la lumière et présentant une sensibilité élevée, afin de pouvoir le commander avec une tension faible.

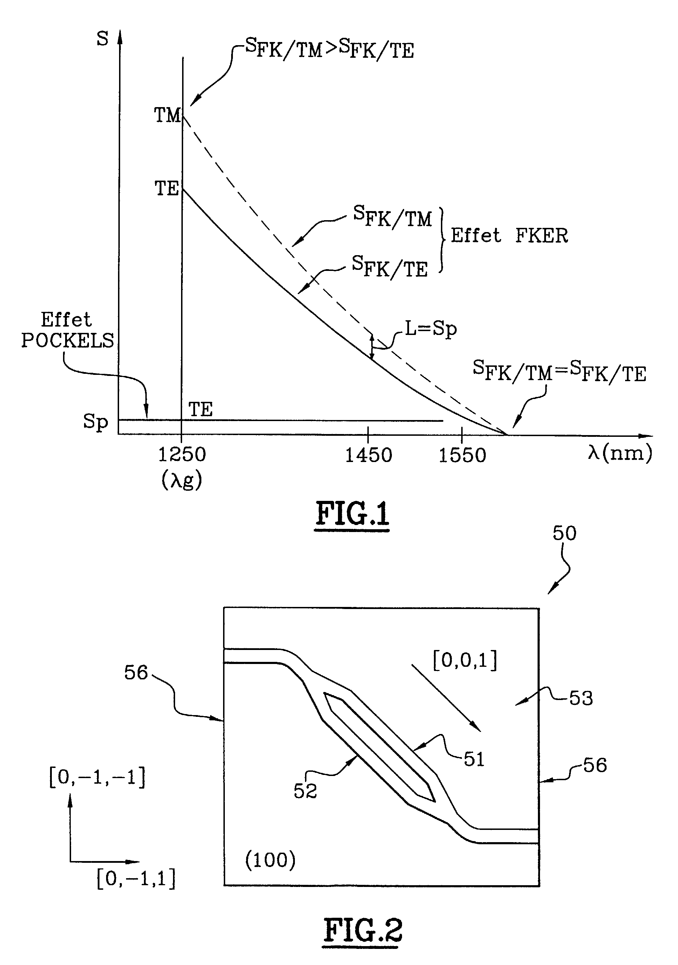

Les courbes de la figure 1, qui représentent la sensibilité S (=Dn/DE) d'un modulateur de phase classique en fonction de la longueur d'onde l d'utilisation, illustrent les principaux phénomènes mis en jeu lors du fonctionnement de ce composant.

Un premier phénomène mis en jeu concerne l'effet Franz-Keldysh. Ce phénomène apparaît lorsque l'on applique un champ électrique sur le composant. Il se traduit par une variation d'absorption qui se produit dans le guide d'onde actif. Ce phénomène s'accompagne toujours d'une variation de l'indice de réfraction Dn dans le guide d'onde. C'est pourquoi on appelle ce phénomène, dans toute la suite de la description, l'effet Franz-Keldysh Electro-Réfraction, noté FKER. Cet effet est dépendant de la polarisation de la lumière. Il est illustré par les deux courbes en trait plein et en traits pointillés respectivement pour les modes TE et TM de polarisation de la lumière.

Dans l'exemple illustré sur cette figure 1, la longueur d'onde de photoluminescence lg du matériau utilisé pour former le guide d'onde actif est de 1250 nm. Cela signifie que si on éclaire ce matériau avec une longueur d'onde inférieure à cette longueur d'onde de photoluminescence lg, le matériau devient absorbant. En revanche, si on l'éclairé avec une longueur d'onde supérieure à lg, le matériau devient transparent. La gamme de longueurs d'onde utilisables pour faire fonctionner le composant doit donc être supérieure à la longueur d'onde de photoluminescence lg du matériau de constitution du guide actif.

Les courbes de la sensibilité S du composant en fonction de la longueur d'onde d'utilisation l, pour l'effet FKER, montrent que plus la longueur d'onde d'utilisation se rapproche de la longueur d'onde de photoluminescence lg du matériau, plus la sensibilité S augmente et plus l'effet FKER est dépendant de la polarisation de la lumière TE et TM (la sensibilité $S_{FK/TM}$ est supérieure à la sensibilité $S_{FK/TE}$).

Un deuxième effet mis en jeu dans cette structure concerne l'effet Pockels. Cet effet se traduit par une variation de l'indice de réfraction Dn du matériau de constitution du guide d'onde actif lorsqu'un champ électrique est appliqué. Ce phénomène est indépendant de la longueur d'onde d'utilisation 1, dans la gamme de longueurs d'onde utilisées habituellement pour le fonctionnement de cette structure. De plus, pour la coupe généralement utilisée, cet effet Pockels est toujours nul pour la polarisation TM de la lumière.

En revanche, pour la polarisation TE de la lumière, ce phénomène est très dépendant de l'orientation des guides par rapport à celle du substrat. En effet, si les guides sont réalisés selon une orientation qui forme un angle a=0° par rapport à l'orientation cristalline du substrat, il apparaît un effet Pockels positif selon TE, qui s'ajoute au premier effet FKER décrit précédemment. En revanche, si cet angle a est égal à 90°, l'effet Pockels selon TE est négatif et se retranche du premier effet FKER. Lorsque cet angle a est égal à 45°, l'effet Pockels s'annule.

Etant donné que lorsque la sensibilité S d'un composant Mach-Zehnder classique augmente, l'effet FKER devient sensible à la polarisation de la lumière, une solution connue consiste à utiliser l'effet Pockels pour compenser l'anisotropie qui apparaît entre les modes TE et TM de polarisation de la lumière.

Ainsi, étant donné que l'effet FKER pour le mode TE est inférieur à l'effet FKER pour le mode TM de polarisation de la lumière (voir courbes de la figure 1), pour pouvoir compenser cette différence, il faut ajouter la variation d'indice Dn due à l'effet Pockels selon TE. Ainsi, il faut réaliser les guides d'onde de telle sorte qu'ils soient orientés selon une direction qui forme un angle compris entre 0° et 45° par rapport à la direction cristalline du substrat.

La figure 2 illustre un tel modulateur de phase 50 à structure de type Mach-Zehnder réalisé selon l'art antérieur, dans lequel les guides d'onde forment un angle par rapport à la direction cristalline du substrat. Les deux branches guidantes, référencées 51 et 52, du modulateur de phase 50 sont en effet réalisées selon la direction [0,0,1], alors que le substrat 53 est orienté selon la direction [0,-1,1] (qui est la coupe généralement utilisée). Dans cet exemple, les branches guidantes sont donc orientées de telle sorte que la direction de propagation de la lumière est proche de 45° par rapport aux faces clivées 56 du substrat. Cette orientation du guide implique la réalisation de virages dans le guide d'onde actif, ce qui complique la technologie de fabrication.

Ces dispositifs présentent cependant plusieurs inconvénients. L'effet Pockels ne peut compenser l'effet FKER que jusqu'à une certaine sensibilité Sp qui reste encore trop faible. En effet lorsque l'angle a formé entre la direction cristalline des guides d'onde et celle du substrat, est nul, l'effet Pockels (Sp) est maximal et il n'est donc plus possible de compenser l'effet FKER au-delà. Cette limite de compensation implique une limitation de la sensibilité du composant (cette limite est représentée par une double flèche, référencée L sur la figure 1, et correspond à la sensibilité maximale Sp due à l'effet Pockels).

Or, le problème que l'on cherche à résoudre consiste à réaliser un modulateur de phase indépendant de la polarisation de la lumière et ayant une sensibilité S élevée pour qu'il puisse répondre à une faible tension de commande.

La présente invention permet de pallier aux inconvénients précités car elle propose un modulateur de phase à semi-conducteur insensible à la polarisation de la lumière et présentant une très bonne sensibilité S.

L'invention se rapporte plus particulièrement à un modulateur de phase à semi-conducteur ayant une structure verticale, comprenant successivement une couche de gaine inférieure, un guide d'onde actif et une couche de gaine supérieure, déposée sur un substrat en matériau III-V, caractérisé en ce que le guide d'onde actif comporte au moins une première couche active et une deuxième couche active de compensation, ladite première couche active possédant une première longueur d'onde de photoluminescence, ladite deuxième couche de compensation possédant une deuxième longueur d'onde de photoluminescence, en ce que ledit modulateur fonctionne avec une longueur d'onde d'utilisation supérieure à ladite première longueur d'onde de photoluminescence d'une valeur comprise entre 80 et 200nm, et en ce que ladite longueur d'onde d'utilisation est supérieure à ladite deuxième longueur d'onde de photoluminescence d'une valeur supérieure à 300nm.

De préférence la longueur d'onde d'utilisation est supérieure à la première longueur d'onde de photoluminescence d'une valeur comprise entre 80 et 150nm, et elle est supérieure à la deuxième longueur d'onde de photoluminescence d'une valeur supérieure à 350nm.

Selon une autre caractéristique de l'invention le premier matériau de constitution de la première couche active et le deuxième matériau de constitution de la deuxième couche active de compensation sont des matériaux quaternaires.

Selon une autre caractéristique de l'invention, le rapport de l'épaisseur de la première couche active à l'épaisseur de la deuxième couche active de compensation est compris entre 1 et 2,5.

Le fait d'utiliser deux matériaux différents formant au moins deux couches pour réaliser le guide actif du composant permet d'obtenir un composant insensible à la polarisation de la lumière et présentant une bonne sensibilité. Le premier matériau constituant la première couche active présente un effet FKER dans la gamme de longueur d'onde d'utilisation, tandis que le deuxième matériau constituant la deuxième couche active de compensation présente un effet Pockels selon le mode TE, dans la gamme de longueur d'onde d'utilisation, qui permet de compenser l'anisotropie entre les modes TE et TM due à l'effet FKER du premier matériau.

D'autres particularités et avantages de l'invention apparaîtront à la lecture de la description donnée à titre d'exemple illustratif mais non limitatif et faite en référence aux figures annexées qui représentent :

- la figure 1, déjà décrite, des courbes représentant la sensibilité S d'un composant classique de type Mach-Zehnder, comprenant un guide d'onde actif constitué d'un seul matériau, en fonction de la longueur d'onde d'utilisation $l$,
- la figure 2, déjà décrite, une vue de dessus du composant de la figure 1,
- la figure 3, une vue en coupe transversale d'un guide d'onde actif destiné à un composant selon l'invention,
- la figure 4, une vue de dessus d'un composant selon l'invention, comportant le guide d'onde actif à structure multicouches de la figure 3,
- la figure 5, des courbes représentant la sensibilité S du composant de la figure 4 en fonction de la longueur d'onde d'utilisation $l$.

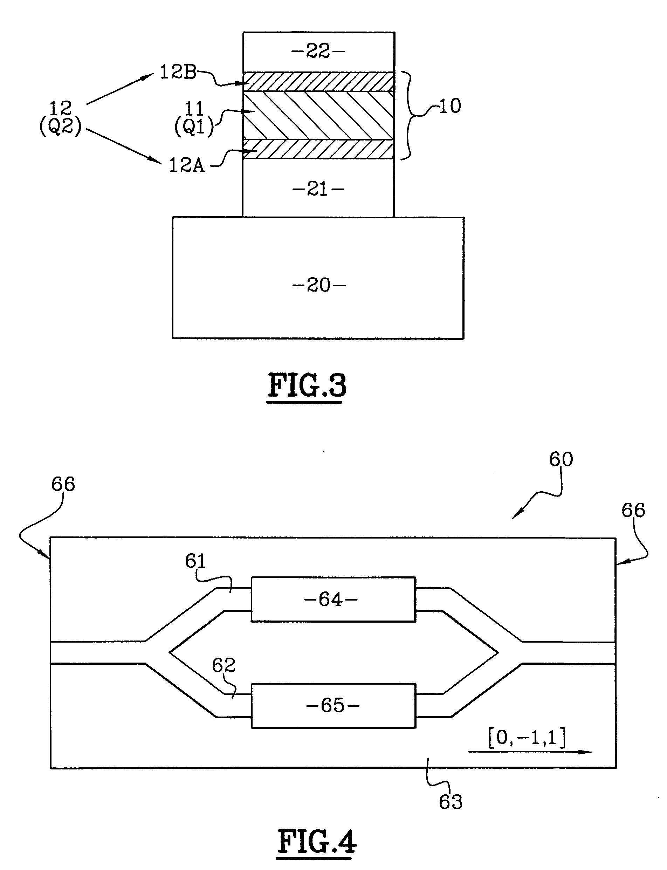

La figure 3 représente, de manière détaillée, une vue en coupe transversale de la structure du guide d'onde actif d'un modulateur de phase pour structure de Mach-Zehnder, selon un mode de réalisation de l'invention.

Le guide d'onde actif, référencé 10, est disposé entre une couche de gaine inférieure 21 et une couche de gaine supérieure 22. Les différentes couches sont déposées successivement, par un procédé classique d'épitaxie, par exemple par épitaxie à jets moléculaires ("MBE"), sur un substrat 20 en matériau III-V, tel que du phosphure d'indium InP par exemple. Les couches de gaine inférieure 21 et supérieure 22 sont réalisées dans le même matériau que le substrat 20, et elles sont dopées respectivement en porteurs d'un premier type (par exemple en porteurs de type n), et en porteurs d'un deuxième type (en porteurs de type p dans l'exemple).

Le guide d'onde actif 10 comporte au moins une première couche active 11 et une deuxième couche active de compensation 12. Les matériaux $Q_1$ et $Q_2$ de constitution de ces deux couches respectivement 11 et 12 sont des matériaux quaternaires non dopés, par exemple InGaAsP. Ils se différencient par leur longueur d'onde de photoluminescence ainsi que par leur indice de réfraction. Dans l'exemple de la figure 3, la deuxième couche active de compensation 12 est séparée en deux sous-couches 12A et 12B disposées respectivement au-dessous et au-dessus de la première couche active 11. Bien sûr cette disposition n'est qu'un exemple purement illustratif et d'autres variantes sont possibles. Ainsi, par exemple, la première couche active 11 peut également être séparée en plusieurs sous-couches entre lesquelles sont disposées des sous-couches de la deuxième couche active de compensation.

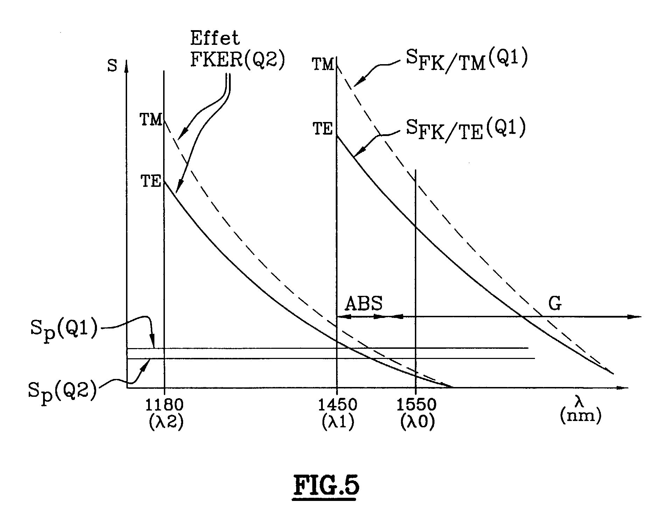

L'influence des deux matériaux de constitution des deux couches 11 et 12 du guide actif est expliquée plus en détails dans la suite de la description, au regard de la figure 5.

La figure 4 schématise une vue de dessus d'un modulateur de phase selon l'invention. Compte tenu de la grande sensibilité recherchée, l'effet Pockels du composant doit être très important pour compenser une partie de l'anisotropie entre les modes TE et TM de polarisation de la lumière. La grande sensibilité recherchée impose donc d'orienter les branches guidantes perpendiculairement aux plans de clivage 66 du composant. De plus, le guide actif, formant les branches guidantes 61 et 62 du composant 60, comporte deux types de matériaux, afin de compenser l'anisotropie restante et d'obtenir une indépendance à la polarisation de la lumière. Le fait de réaliser les branches guidantes droites et perpendiculaires aux plans de clivage simplifie la technologie de fabrication puisqu'il n'est plus nécessaire de contrôler la réalisation de virages afin d'orienter le guide actif selon une direction particulière. Des électrodes supérieures 64 et 65 sont disposées au dessus des deux branches guidantes 61, 62. Elles permettent d'assurer le fonctionnement du modulateur de phase lorsqu'un champ électrique y est appliqué.

La figure 5 représente des courbes de la sensibilité S des deux matériaux de constitution du guide d'onde actif, en fonction de la longueur d'onde d'utilisation 1. Ces courbes permettent de comprendre les effets mis en jeu lors du fonctionnement du modulateur de phase selon l'invention.

Le matériau $Q_1$ de constitution de la première couche active 11 du guide d'onde possède une longueur d'onde de photoluminescence $l_1$, tandis que le matériau $Q_2$ de constitution de la deuxième couche active de compensation 12 possède une autre longueur d'onde de photoluminescence $l_2$. Ces deux longueurs d'onde $l_1$ et $l_2$ sont intrinsèques aux matériaux utilisés et sont donc fixes. De plus, pour assurer le guidage optique, l'indice de réfraction $n_1$ du premier matériau $Q_1$ et l'indice de réfraction $n_2$ du deuxième matériau $Q_2$ sont supérieurs à l'indice de réfraction $n_3$ des couches

de gaine 21 et 22.

Pour assurer le fonctionnement du modulateur de phase selon l'invention, il faut que les matériaux de constitution du guide actif soient transparents aux longueurs d'onde d'utilisation l. Il faut par conséquent que la gamme de longueurs d'onde d'utilisation l soit supérieure à la longueur d'onde de photoluminescence la plus élevée ($l_1$ dans cet exemple). De plus, si la longueur d'onde d'utilisation l se rapproche trop de la longueur d'onde de photoluminescence la plus élevée $l_1$, l'absorption, dans le premier matériau Q1 correspondant, devient de plus en plus importante. Or, pour avoir un modulateur de phase apte à fonctionner correctement, la phase doit être prédominante par rapport à l'absorption. Il y a donc une zone d'absorption prédominante, référencée ABS sur la figure 5, au-dessus de laquelle la gamme de longueurs d'onde d'utilisation, référencée G sur la figure 5, doit de préférence se situer pour permettre au modulateur de phase de fonctionner correctement.

Le premier matériau $Q_1$ de la première couche active 11 présente un effet Franz - Keldysh Electro - Réfraction FKER très dépendant de la polarisation de la lumière lorsque la sensibilité S augmente. Etant donné que le guide est réalisé selon une direction qui forme un angle nul avec la direction cristalline du substrat, le premier matériau présente également un effet Pockels $S_p(Q1)$ ($=D_{nP}(Q_1)/DE$) maximal, selon le mode TE, qui s'ajoute à l'effet FKER $S_{FK/TE}(Q1)$ ($=D_{nFK/TE}(Q_1)/DE$) selon le mode TE. L'effet FKER $S_{FK/TE}(Q1)$ ($=D_{nFK/TE}(Q_1)/DE$) selon le mode TE étant inférieur à l'effet FKER $S_{FK/TM}(Q1)$ ($=D_{nFK/TM}(Q_1)/DE$) selon le mode TM, l'effet Pockels $S_p(Q1)$ ($=D_{np}(Q_1)/DE$) permet de compenser une partie de l'anisotropie entre les modes TE et TM. Cependant, lorsque la sensibilité S devient élevée, l'anisotropie entre les deux modes de polarisation de la lumière devient si forte que l'effet Pockels du premier matériau ne suffit plus à la compenser.

Le deuxième matériau $Q_2$ de la deuxième couche active de compensation 12 est donc prévu pour assurer la compensation de la biréfringence restante, afin de rendre le modulateur de phase insensible à la polarisation de la lumière pour une sensibilité élevée. L'effet FKER de ce deuxième matériau $Q_2$ est négligeable par rapport à celui du premier matériau $Q_1$, dans la gamme G de longueurs d'onde d'utilisation considérée. Cet effet FKER est en effet décalé vers la deuxième longueur d'onde de photoluminescence $l_2$, qui est bien inférieure à celle $l_1$ du premier matériau $Q_1$. Le deuxième matériau $Q_2$ présente donc, dans la gamme de longueurs d'onde d'utilisation considérée, uniquement un effet Pockels $S_p(Q2)$ ($=D_{nP}(Q_2)/DE$). L'effet Pockels de ce deuxième matériau $Q_2$, selon le mode TE, s'ajoute donc à l'effet FKER selon le mode TE et à l'effet Pockels selon le mode TE du premier matériau $Q_1$ afin de compenser entièrement l'anisotropie entre les deux modes de polarisation TE et TM.

Grâce à la structure du guide d'onde actif du modulateur de phase selon l'invention, on obtient donc un composant insensible à la polarisation de la lumière et apte à fonctionner avec une sensibilité élevée, c'est à dire qu'une faible tension de commande suffit pour le faire fonctionner, pour une capacité C donnée.

Un exemple particulier, décrit ci-après et illustré par la figure 5, permet d'étayer la description. Bien sûr, l'invention ne se limite pas à cet exemple qui n'est donné qu'à titre illustratif. Dans cet exemple, le premier matériau Q1 possède une longueur d'onde de photoluminescence $l_1$ égale à 1450nm, tandis que le deuxième matériau Q2 possède une longueur d'onde de photoluminescence $l_2$ égale à 1180nm. La longueur d'onde d'utilisation $l_0$ du modulateur selon l'invention est située dans une gamme supérieure à la zone d'absorption prédominante ABS du premier matériau. Pour cela, cette longueur d'onde d'utilisation $l_0$ est de préférence supérieure à $l_1$ d'une valeur de 80nm. En effet, si la longueur d'onde d'utilisation $l_0$ est supérieure à $l_1$ de seulement 60nm, on risque d'observer une absorption trop forte par rapport aux variations d'indice $D_n$ dans le matériau et d'assister à un phénomène d'électro-absorption au lieu d'une électro-réfraction.

De plus, pour que le modulateur présente une sensibilité S satisfaisante, la longueur d'onde d'utilisation $l_0$ ne doit pas non plus dépasser une certaine limite supérieure. Pour cela, la longueur d'onde d'utilisation $l_0$ est supérieure à $l_1$ d'une valeur comprise entre 80 et 200nm. De préférence, la différence entre $l_0$ et $l_1$ est inférieure à 150nm. Dans cet exemple particulier, la longueur d'onde d'utilisation $l_0$ est égale à 1550nm.

D'autre part, cette gamme G de longueurs d'onde d'utilisation, par rapport au deuxième matériau $Q_2$, doit être telle que la différence entre la longueur d'onde d'utilisation $l_0$ et la deuxième longueur d'onde de photoluminescence $l_2$ est supérieure à 300nm, de préférence supérieure à 350nm. Cette différence entre $l_0$ et $l_2$ est nécessaire pour que l'effet FKER du deuxième matériau $Q_2$ puisse être négligé par rapport à l'effet FKER du premier matériau $Q_1$.

Par ailleurs, le rapport des épaisseurs entre les deux couches actives est très important pour obtenir la compensation désirée. Ce rapport des épaisseurs est en fait conditionné par la valeur de la longueur d'onde d'utilisation $l_0$ par rapport aux longueurs d'onde de photoluminescence $l_1$ et $l_2$ des matériaux $Q_1$ et $Q_2$ de constitution de ces couches. Dans cet exemple particulier, l'épaisseur de la première couche active 11 (premier matériau $Q_1$) est égale à 0,3μm et l'épaisseur de chaque sous-couche 12A, 12B de la deuxième couche active de compensation 12 (deuxième matériau $Q_2$) est égale à 0,1μm. Le rapport de l'épaisseur de la première couche active à l'épaisseur de la deuxième couche active de compensation est donc égal à 1,5. D'une manière générale, ce rapport peut varier, selon la valeur de la longueur d'onde d'utilisation $l_0$, de 1 à 2,5.

Le tableau I annexé à la fin de la description résume les phénomènes mis en jeu pour chaque matériau $Q_1$ et $Q_2$ de constitution du guide actif dans cet exemple particulier. La compensation de l'effet FKER, selon le mode TE,

du premier matériau $Q_1$ ($D_{nFK/TE}(Q_1)$) est donc obtenue par l'effet Pockels($D_{nP}(Q_1)$) du premier matériau $Q_1$ ainsi que par l'effet Pockels ($D_{nP}(Q_2)$) du deuxième matériau $Q_2$. Cette compensation permet d'obtenir la relation suivante :

$$D_{nFK/TE}(Q_1) + D_{nP}(Q_1) + D_{nP}(Q_2) = D_{nFK/TM}(Q_1).$$

Cette relation confirme que le modulateur selon l'invention est indépendant de la polarisation de la lumière, et ceci quelle que soit la sensibilité. On peut donc réaliser un modulateur à sensibilité élevée, c'est à dire commandable avec une faible tension, contrairement aux modulateurs de phase classiques. Typiquement, la tension de commande d'un modulateur de phase selon l'invention est réduite d'un facteur 10 par rapport à la tension de commande d'un modulateur classique.

En résumé, le premier matériau $Q_1$ donne la sensibilité globale du modulateur, tandis que le deuxième matériau $Q_2$ sert à compenser l'anisotropie entre les modes TE et TM de polarisation de la lumière.

De plus, les branches guidantes du modulateur de phase sont réalisées selon une direction droite et perpendiculaire aux plans de clivage du composant si bien qu'il n'y a plus besoin de réaliser de virages, et la technologie de fabrication s'en trouve donc facilitée.

## -I-

|  | TM | | TE | |
|---|---|---|---|---|
|  | FKER | Pockels | FKER | Pockels |
| $Q_1$ | $D_{nFK/TM}(Q_1)$ | 0 | $D_{nFK/TE}(Q_1)$ | $D_{nP}(Q_1)$ |
| $Q_2$ | négligeable | 0 | négligeable | $D_{nP}(Q_2)$ |
| TOTAL | $D_{nFK/TM}(Q_1)$ | | $D_{nFK/TE}(Q_1)$ | $+ D_{nP}(Q_1)$ $+ D_{nP}(Q_2)$ |

**Revendications**

1.  Modulateur de phase à semi-conducteur ayant une structure comprenant successivement une couche de gaine inférieure (21), un guide d'onde actif (10) et une couche de gaine supérieure (22), déposés sur un substrat (20) en matériau III-V, caractérisé en ce que le guide d'onde actif (10) comporte au moins une première couche active (11) et une deuxième couche active de compensation (12), ladite première couche active (11) possédant une première longueur d'onde de photoluminescence ($l_1$), ladite deuxième couche active de compensation (12) possédant une deuxième longueur d'onde de photoluminescence ($l_2$), en ce que ledit modulateur fonctionne avec une longueur d'onde d'utilisation ($l_0$) supérieure à ladite première longueur d'onde de photoluminescence ($l_1$) d'une valeur comprise entre 80 et 200nm, et en ce que ladite longueur d'onde d'utilisation ($l_0$) est supérieure à ladite deuxième longueur d'onde de photoluminescence ($l_2$) d'une valeur supérieure à 300nm.

2.  Modulateur selon la revendication 1, caractérisé en ce que la longueur d'onde d'utilisation ($l_0$) est supérieure à la première longueur d'onde de photoluminescence ($l_1$) d'une valeur comprise entre 80 et 150nm.

3.  Modulateur selon la revendication 1, caractérisé en ce que la longueur d'onde d'utilisation ($l_0$) est supérieure à la deuxième longueur d'onde de photoluminescence ($l_2$) d'une valeur supérieure à 350nm.

4.  Modulateur selon l'une des revendications 1 à 3, caractérisé en ce que le premier matériau ($Q_1$) de constitution de la première couche active (11) et le deuxième matériau ($Q_2$) de constitution de la deuxième couche active de compensation (12) sont des matériaux quaternaires.

5.  Modulateur selon l'une des revendications 1 à 4, caractérisé en ce que le rapport de l'épaisseur de la première couche active (11) à l'épaisseur de la deuxième couche active de compensation (12) est compris entre 1 et 2,5.

S

$S_{FK/TM} > S_{FK/TE}$

TM

TE

$S_{FK/TM}$ } Effet FKER

$S_{FK/TE}$

Effet
POCKELS

L=Sp

$S_{FK/TM} = S_{FK/TE}$

Sp    TE

TE

1250
$(\lambda g)$     1450     1550     $\lambda$(nm)

## FIG.1

50

56

$[0,0,1]$

53

51

52

56

$[0,-1,-1]$

$[0,-1,1]$

(100)

## FIG.2

**FIG.3**

**FIG.4**

**FIG.5**

Office européen
des brevets

**RAPPORT DE RECHERCHE EUROPEENNE**

Numéro de la demande

EP 99 40 3044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | LEE S S ET AL: "Analysis and design of high-speed high-efficiency GaAs-AlGaAs double-heterostructure waveguide phase modulator" IEEE JOURNAL OF QUANTUM ELECTRONICS, MARCH 1991, USA, vol. 27, no. 3, pages 726-736, XP000227529 ISSN: 0018-9197 * figure 1; chapitre II.B * | 1 | G02F1/025 |
| A | DUCHET C ET AL: "Polarisation-insensitive modulator and influence of propagation direction on bulk electroabsorption" ELECTRONICS LETTERS, 30 JAN. 1997, IEE, UK, vol. 33, no. 3, pages 233-235, XP002112314 ISSN: 0013-5194 * le document en entier * | 1-5 | |
| A | CHEN Y ET AL: "Polarization-independent strained InGaAs/InGaAlAs quantum-well phase modulators" IEEE PHOTONICS TECHNOLOGY LETTERS, OCT. 1992, USA, vol. 4, no. 10, pages 1120-1123, XP000316533 ISSN: 1041-1135 * abrégé * | 1 | **DOMAINES TECHNIQUES RECHERCHES (Int.Cl.7)**<br><br>G02F |

Le présent rapport a été établi pour toutes les revendications

| Lieu de la recherche | Date d'achèvement de la recherche | Examinateur |
|---|---|---|
| LA HAYE | 8 mars 2000 | Iasevoli, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)